# EUROPEAN PATENT APPLICATION

(11) **EP 4 478 522 A1**
(43) Date of publication of application: **18.12.2024**
(21) Application number: 23749929.8
(22) Date of filing: 27.01.2023
(51) Int. Cl.: H01M 50/566, H01M 50/557, B23K 37/00, H01M 50/536, H01M 50/54

(54) **SECONDARY BATTERY MANUFACTURING METHOD AND SECONDARY BATTERY MANUFACTURING DEVICE USED THEREIN**

(30) Priority: 07.02.2022 KR 20220015837
(71) Applicant: LG Energy Solution, Ltd., Seoul 07335 (KR)
(72) Inventor: PARK, Hyeon Uk, Daejeon 34122 (KR); CHOI, Nak Sung, Daejeon 34122 (KR); KIM, Gi Man, Daejeon 34122 (KR); KIM, Dae Hong, Daejeon 34122 (KR)
(74) Representative: Goddar, Heinz J.
(86) International application number: PCT/KR2023/001294
(87) International publication number: WO 2023/149696

(57) **Abstract**

The present invention relates to a method for manufacturing a secondary battery and an apparatus for manufacturing a secondary battery used for the same, and more particularly, to a method for manufacturing a secondary battery, which manufactures the secondary battery including a plurality of electrode tabs and an electrode lead, and an apparatus for manufacturing a secondary battery used for the method.

The present invention provides a method for manufacturing a secondary battery, which includes a tab-lead stack welding process of performing welding on a tab-lead stack in which a plurality of electrode tabs and an electrode lead are stacked, to connect the electrode tabs to the electrode lead, and a tab-lead stack processing process of continuously pressing a welded portion of the tab-lead stack in a longitudinal direction to process the welded portion.

## Description

### TECHNICAL FIELD

### CROSS-REFERENCE TO RELATED APPLICATION

The present application claims the benefit of the priority of Korean Patent Application No. 10-2022-0015837, filed on February 07, 2022, which is hereby incorporated by reference in its entirety.

### TECHNICAL FIELD

The present invention relates to a method for manufacturing a secondary battery and an apparatus for manufacturing a secondary battery used for the same, and more particularly, to a method for manufacturing a secondary battery, which manufactures the secondary battery including a plurality of electrode tabs and an electrode lead, and an apparatus for manufacturing a secondary battery used for the method.

### BACKGROUND ART

As portable wireless devices such as video cameras, mobile phones, and portable PCs, have small weight and high performance, a demand for secondary batteries as energy sources rapidly increases. Among these secondary batteries, researches on lithium secondary batteries having high energy density and discharge voltage are actively carried out, and also the lithium secondary batteries are commercialized and widely used.

Attention is also paid to the secondary batteries as power sources for electric vehicles (EV), hybrid electric vehicles (HEV), and so on, which are proposed as solutions to solve air pollution, etc., caused by existing gasoline or diesel vehicles using fossil fuel.

Recently, pouch type batteries, each of which has a structure in which a stacked type or stack and folding type electrode assembly is embedded in a pouch type battery case made of an aluminum laminate sheet, attract a lot of interest for reasons such as low manufacture cost, small weight, and easy change in shape, and use thereof also gradually increases.

These pouch type batteries are generally made by including an electrode assembly, in which electrode plates are sequentially stacked in a state in which a separator is interposed therebetween, and a battery case that is an exterior material that accommodates the electrode assembly. Here, a plurality of electrode tabs extending from the electrode plates are provided in the electrode assembly. The electrode tabs may be connected to an electrode lead protruding to the outside of the battery case, and accordingly, the electrode assembly inside the battery case may be electrically connected to an external electrical device, an external secondary battery, or the like.

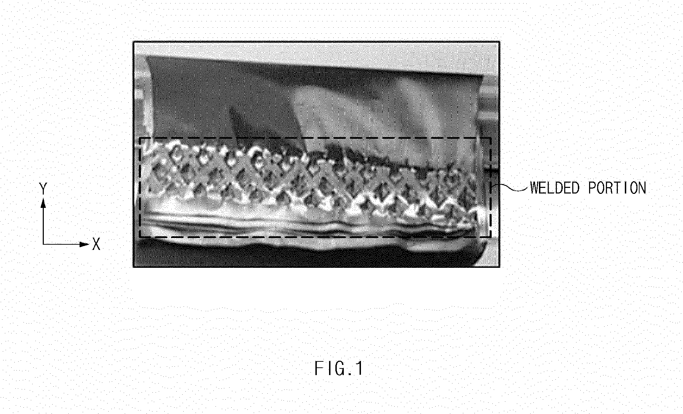

The plurality of electrode tabs are fixed to each other or connected to the electrode lead by welding. However, as illustrated in FIG. 1, a welded portion has a surface, which relatively roughens and to which surface tensile residual stress caused by the welding is applied, after the welding of the plurality of electrode tabs to each other or the plurality of electrode tabs and the electrode lead to each other is performed. In this case, the surface roughening in a fatigue fracture atmosphere provides an area of an occurrence of fine cracks. Here, the surface tensile residual stress functions as a kind of driving power that promotes growth and spread of the fine cracks. Accordingly, a fracture time point of the welded portion is brought forward, and this leads to a problem that reliability of products is reduced.

Thus, the related art is intended to resolve surface roughness of the welded portion by pressing the welded portion with a press after the welding of the plurality of electrode tabs to each other or the plurality of electrode tabs and the electrode lead to each other is performed. However, also in this case, there is a limit to improving surface properties such as a degree of the surface roughness, the length and magnitude of surface compressive residual stress, or the like. Accordingly, there is a need for techniques to solve the problems as above.

### DISCLOSURE OF THE INVENTION

### TECHNICAL PROBLEM

The present invention has been devised to solve the problems as above, and one aspect of the present invention is to provide a method for manufacturing a secondary battery, which is capable of effectively processing a welded portion of an electrode tab and an electrode lead, and an apparatus for manufacturing a secondary battery used for the method.

### TECHNICAL SOLUTION

The present invention provides a method for manufacturing a secondary battery including: a tab-lead stack welding process of performing welding on a tab-lead stack, in which a plurality of electrode tabs and an electrode lead are stacked, to connect the electrode tabs to the electrode lead; and a tab-lead stack processing process of continuously pressing a welded portion of the tab-lead stack in a longitudinal direction to process the welded portion.

A plurality of shape-deformed portions at which shape deformation occurs by the welding may be formed in the welded portion of the tab-lead stack in at least one direction, and, in the tab-lead stack processing process, the plurality of shape-deformed portions may be sequentially pressed in a formation direction of the shape-deformed portions to process the welded portion.

The tab-lead stack processing process may be performed through a roll-burnishing or ball-burnishing process.

In the tab-lead stack processing process, the welded portion may be pressed at a pressure of 100 kgf or higher.

The tab-lead stack welding process may be performed through ultrasonic welding or laser welding.

The method for manufacturing the secondary battery according to the present invention may further include, before the tab-lead stack welding process, an electrode tab stack welding process of performing welding on an electrode tab stack, in which the plurality of electrode tabs are stacked, to connect the plurality of electrode tabs to each other.

In addition, the method for manufacturing the secondary battery according to the present invention may further include an electrode tab stack processing process of continuously pressing a welded portion of the electrode tab stack in a longitudinal direction to process the welded portion between the electrode tab stack welding process and the tab-lead stack welding process.

A plurality of shape-deformed portions at which shape deformation occurs by the welding may be formed in the welded portion of the electrode tab stack in at least one direction, and the plurality of shape-deformed portions may be sequentially pressed in a formation direction of the shape-deformed portions to process the welded portion in the electrode tab stack processing process.

In addition, the method for manufacturing the secondary battery may further include, after the tab-lead stack processing process, a tape attaching process of attaching a tape made of an insulating material to the welded portion of the tab-lead stack.

The present invention provides an apparatus for manufacturing a secondary battery, which processes a welded portion of at least one of a tab-lead stack, in which a plurality of electrode tabs and an electrode lead are stacked, or an electrode tab stack, in which the plurality of electrode tabs are stacked. The apparatus includes a main body, and a processing part that is installed in the main body and continuously presses and processes the welded portion.

The processing part may include a pressing part, which is moved and presses the welded portion while rotating, and a support which supports the pressing part to be rotatable.

The pressing part may include a roller or a ball.

The pressing part may have an iron or ceramic material.

### ADVANTAGEOUS EFFECTS

The present invention may continuously press the welded portion of the tab-lead stack or electrode tab stack in the longitudinal direction, so that the surface roughness of the welded portion may be effectively reduced to suppress the spread of the fine cracks in the welded portion.

Moreover, as the present invention continuously presses the welded portion of the tab-lead stack or electrode tab stack in the longitudinal direction, the surface residual stress of the welded portion may be effectively imparted to mitigate the spread and growth of the fine cracks and increase the fatigue strength, the fatigue limit, and the welding tensile strength of an object to be welded.

### BRIEF DESCRIPTION OF THE DRAWINGS

FIG. 1 is an image showing a state of a welded portion after welding of an electrode tab stack is performed.
FIG. 2 is a flowchart illustrating a method for manufacturing a secondary battery according to Embodiment 1 of the present invention.
FIG. 3 is a perspective view illustrating a configuration of an apparatus for manufacturing a secondary battery according to Embodiment 2 of the present invention.
FIG. 4 is a conceptual view illustrating a state in which the apparatus for manufacturing the secondary battery in FIG. 3 subsequently presses a welded portion of a tab-lead stack.
FIG. 5a is a graph illustrating results obtained by comparing residual stress values of tab-lead stacks after a method for manufacturing a secondary battery according to the related art and a method for manufacturing a secondary battery according to the present invention are performed, respectively.
FIG. 5b is a graph illustrating results obtained by comparing heights of shape-deformed portions after a method for manufacturing a secondary battery according to the related art and a method for manufacturing a secondary battery according to the present invention are performed, respectively.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Method for manufacturing secondary battery

The present invention provides a method for manufacturing a secondary battery including a tab-lead stack welding process (S30) of performing welding on a tab-lead stack 100, in which a plurality of electrode tabs and an electrode lead are stacked, to connect the electrode tabs to the electrode lead, and a tab-lead stack processing process (S40) of continuously pressing a welded portion W of the tab-lead stack 100 in a longitudinal direction to process the welded portion W.

First, the tab-lead stack welding process (S30) is a process of performing the welding on the tab-lead stack 100, in which the plurality of electrode tabs and the electrode lead are stacked, to connect the electrode tabs to the electrode lead, and may be performed in various methods.

Specifically, the tab-lead stack welding process (S30) may be performed by performing the welding on at least one area of a portion, at which the electrode tabs and the electrode lead overlap each other, so that the electrode tabs are welded and coupled to the electrode lead. Here, the tab-lead stack welding process (S30) may be performed in various methods and, for example, may be performed through ultrasonic welding or laser welding.

In such a tab-lead stack welding process (S30), the welded portion W having a predetermined size may be formed in the tab-lead stack 100. Here, the welded portion W may be understood as a concept including not only a portion, at which the electrode tabs are directly coupled to the electrode lead by welding on the tab-lead stack 100, but also a portion which is indirectly affected by the welding, such as deformation of an external shape, deformation of a coupling structure between inner metals, or the like, caused by the welding. An area other than the welded portion W on the tab-lead stack 100 may hereinafter be defined as a non-welding portion N.

The welded portion W may be a portion at which a shape of a surface is deformed by pressing and/or heating, etc., during the welding. For example, a plurality of shape-deformed portions a, at which shape deformation caused by welding occurs, may be formed in the surface of the welded portion W in at least one direction. Here, the shape-deformed portions a are portions, at which the shape is deformed by welding heat, pressure, vibration, or the like, on the tab-lead stack 100, and may be understood as portions formed to protrude and/or be recessed from at least one surface of the tab-lead stack 100.

Such shape-deformed portions a have problems that surface roughness of the tab-lead stack 100 is increased, tensile residual stress is generated, and concentration of stress is caused to provide expression of fine cracks so that reliability of a semifinished product is critically affected.

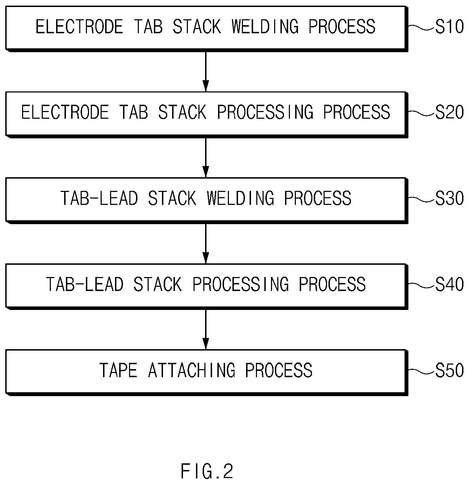

Accordingly, the present invention is intended to effectively prevent the problems above by performing the tab-lead stack processing process (S40) after the tab-lead stack welding process (S30) is performed, as illustrated in FIG. 2.

The tab-lead stack processing process (S40) is a process of continuously pressing the welded portion W of the tab-lead stack 100 in the longitudinal direction to process the welded portion W, and may be performed in various methods. Here, the welded portion W may be pressed at various pressures and, for example, may be pressed at a pressure of 100 kgf or higher.

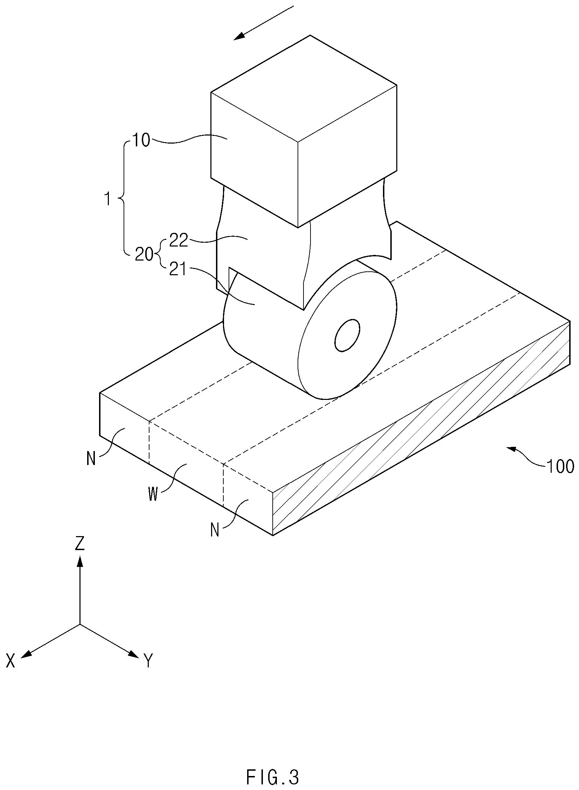

Specifically, in the tab-lead stack processing process (S40), a processing part 20 to be described later may press the welded portion W of the tab-lead stack 100 in a vertical direction (a direction parallel to a Z axis in FIG. 3) and simultaneously process the welded portion W of the tab-lead stack 100 while moving horizontally in a longitudinal direction (an x direction in FIG. 3) of the welded portion W. In the tab-lead stack processing process (S40), however, the processing part 20 is not limited to moving horizontally in the longitudinal direction (the x direction in FIG. 3) of the welded portion W, and may move horizontally in a width direction (an y direction in FIG. 3) of the welded portion W.

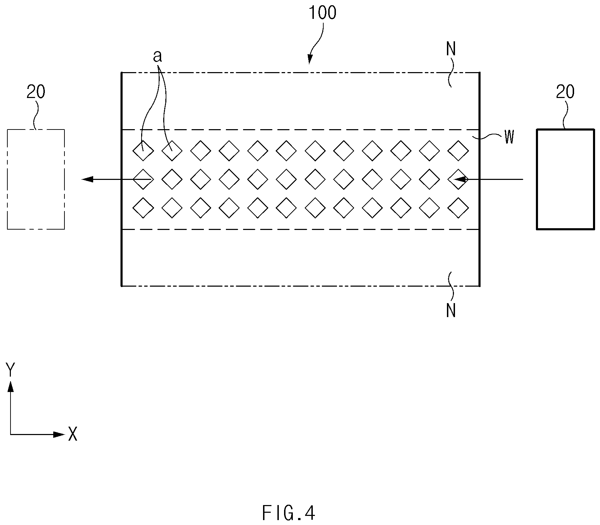

Here, when the plurality of shape-deformed portions a are formed in the welded portion W, the welded portion W may be processed by continuously pressing the plurality of shape-deformed portions a in a formation direction of the shape-deformed portions a in the tab-lead stack processing process (S40). In the tab-lead stack processing process (S40), for example, the processing part 20 to be described later may process the welded portion W of the tab-lead stack 100 while being moved and pressing the welded portion W in a formation direction (an x direction in FIG. 4) of the shape-deformed portions a as illustrated in FIG. 4.

Accordingly, in the tab-lead stack processing process (S40), the welded portion W may be pressed for a relatively long time compared to a press processing of instantaneously compressing the entire area of the welded portion W, and shearing deformation may be provided simultaneously with compressive deformation, so that the compressive residual stress may be effectively applied in a thickness direction (a z direction in FIG. 3) of the tab-lead stack 100 and the surface roughness may be significantly reduced. Here, the welded portion W may be compressed for about 0.2 second in the press processing, but the welded portion W may be compressed for 0.2 second or longer in the tab-lead stack processing process (S40) according to the present invention.

Such a tab-lead stack processing process (S40) may be performed through a roll-burnishing process, a ball-burnishing process, or the like. Here, a moving path, a moving speed, a size, a shape, and the like, of each of a roll and a ball may be variously set according to the time required for processing, the number of times of processing, or the like.

For example, the welded portion W may be roll-burnished or ball-burnished at least one time in the tab-lead stack processing process (S40). Specifically, the roll-burnishing or ball-burnishing process may be performed by reciprocally moving the roll and the ball on the welded portion W in the tab-lead stack processing process (S40). Here, not only the welded portion W but also the non-welding portion N may be roll-burnished or ball-burnished in the tab-lead stack processing process (S40).

In addition, the size of the roll may be adjusted to adjust a pressing area of the welded portion W in the tab-lead stack processing process (S40). That is, the size of the roll may be set to be relatively small to more precisely press the welded portion W in the tab-lead stack processing process (S40), and the size of the roll may be set to be relatively large to rapidly press the welded portion W so as to reduce the processing time in the tab-lead stack processing process (S40). In this case, the size of the roll may be also adjusted according to the number, spacing, and the like, of the shape-deformed portions a described above.

A tape attaching process (S50) of attaching a tape made of an insulating material to the welded portion W of the tab-lead stack 100 may be performed after the tab-lead stack processing process (S40).

Here, the tape attaching process (S50) may be performed by attaching an insulating tape to the welded portion W of the tab-lead stack 100 in order to prevent the welded portion W from being exposed to the outside and damaged.

An electrode tab stack welding process (S10) in which a plurality of electrode tabs are also welded and coupled to each other may be performed before the tab-lead stack welding process (S30) described above.

Specifically, the electrode tab stack welding process (S10) is a process of performing the welding on an electrode tab stack (not shown), in which the plurality of electrode tabs are stacked, to connect the plurality of electrode tabs to each other, and may be performed in various methods.

Specifically, the electrode tab stack welding process (S10) may be performed by performing the welding on at least one area of a portion, at which the plurality of electrode tabs are stacked, so that the plurality of electrode tabs are welded and coupled to each other. Here, the electrode tab stack welding process (S10) may be performed in various methods and, for example, may be performed through ultrasonic welding or laser welding.

In such an electrode tab stack welding process (S10), a welded portion W having a predetermined size may be formed in the electrode tab stack like in the tab-lead stack welding process (S30) described above. Here, the welded portion W may be understood as a concept including not only a portion, at which the electrode tabs are directly coupled to each other on the electrode tab stack by welding, but also a portion which is indirectly affected by the welding, such as deformation of an external shape, deformation of a coupling structure between inner metals, or the like, caused by the welding. An area other than the welded portion W on the electrode tab stack may hereinafter be defined as a non-welding portion N.

Here, the welded portion W may be a portion at which a shape of a surface is deformed by pressing and/or heating, etc., during the welding. For example, a plurality of shape-deformed portions a, at which shape deformation caused by welding occurs, may be formed in the surface of the welded portion W in at least one direction. Here, the shape-deformed portions a are portions, at which the shape is deformed by welding heat, pressure, vibration, or the like, on the electrode tab stack, and may be understood as portions formed to protrude and/or be recessed from at least one surface of the electrode tab stack.

Such shape-deformed portions a have problems that surface roughness of the electrode tab stack is increased, tensile residual stress is generated, and concentration of stress is caused to provide expression of fine cracks so that reliability of a semifinished product is critically affected.

Accordingly, the present invention is intended to effectively prevent the problems above by performing an electrode tab stack processing process (S20) after the electrode tab stack welding process (S10) is performed, as illustrated in FIG. 2.

The electrode tab stack processing process (S20) is a process of continuously pressing the welded portion W of the electrode tab stack in a longitudinal direction to process the welded portion W between the electrode tab stack welding process (S10) and the tab-lead stack welding process (S30), and may be performed in various methods. Here, the welded portion W may be pressed at various pressures and, for example, may be pressed at a pressure of 100 kgf or higher.

Specifically, in the electrode tab stack processing process (S20), the welded portion W of the electrode tab stack may be vertically pressed and simultaneously the welded portion W of the electrode tab stack may be processed with horizontal movement in the longitudinal direction of the welded portion W.

However, in the electrode tab stack processing process (S20), the processing part 20 is not limited to moving horizontally in the longitudinal direction of the welded portion W, and may move horizontally in a width direction of the welded portion W.

Here, when the plurality of shape-deformed portions a are formed in the welded portion W, the welded portion W may be processed by continuously pressing the plurality of shape-deformed portions a in a formation direction of the shape-deformed portions a in the electrode tab stack processing process (S20). For example, the processing part 20 to be described later may process the welded portion W of the electrode tab stack while being moved and pressing the welded portion W in the formation direction of the shape-deformed portions a in the electrode tab stack processing process (S20) .

Accordingly, in the electrode tab stack processing process (S20), the welded portion W may be pressed for a relatively long time compared to a press processing of instantaneously compressing the entire area of the welded portion W, and shearing deformation may be provided simultaneously with compressive deformation, so that the compressive residual stress may be effectively applied in a thickness direction of the electrode tab stack and the surface roughness may be significantly reduced.

Such an electrode tab stack processing process (S20) may be performed through a roll-burnishing process, a ball-burnishing process, or the like. Here, a moving path, a moving speed, a size, a shape, and the like, of each of a roll and a ball may be variously set according to the time required for processing, the number of times of processing, or the like.

For example, the welded portion W may be roll-burnished or ball-burnished at least one time in the electrode tab stack processing process (S20). Specifically, the roll-burnishing or ball-burnishing process may be performed by reciprocally moving the roll and the ball on the welded portion W in the electrode tab stack processing process (S20). Here, not only the welded portion W but also a non-welding portion N may be roll-burnished or ball-burnished in the electrode tab stack processing process (S20).

In addition, the size of the roll may be adjusted to adjust a pressing area of the welded portion W in the electrode tab stack processing process (S20). That is, the size of the roll may be set to be relatively small to more precisely press the welded portion W in the electrode tab stack processing process (S20), and the size of the roll may be set to be relatively large to rapidly press the welded portion W so as to reduce the processing time in the electrode tab stack processing process (S20). In this case, the size of the roll may be also adjusted according to the number, spacing, and the like, of the shape-deformed portions a described above.

### Apparatus for manufacturing secondary battery

The present invention provides an apparatus 1 for manufacturing a secondary battery, which processes a welded portion W of at least one of a tab-lead stack 100, in which a plurality of electrode tabs and an electrode lead are stacked, or an electrode tab stack in which the plurality of electrode tabs are stacked. The apparatus 1 for manufacturing the secondary battery includes a main body 10, and a processing part 20 that is installed in the main body 10 and continuously presses and processes the welded portion W.

The apparatus 1 for manufacturing the secondary battery may be provided at various position based on the tab-lead stack 100 and the electrode tab stack. For example, the apparatus 1 for manufacturing the secondary battery may be installed at an upper side, at a lower side, or at each of the upper and lower sides of the tab-lead stack 100 and the electrode tab stack.

Here, the main body 10 is a component, in which the processing part 20 describe above is installed, and may have various configurations. For example, the main body 10 may include a moving device (not shown) that allows the processing part 20 to be movable. Here, the moving device may be constituted by a hydraulic cylinder, etc., and may be connected to and controlled by an industrial computer or the like, in a wireless/wired manner.

The processing part 20 is a component, which is installed in the main body 10 and continuously presses and processes the welded portion W, and may have various configurations.

Here, the processing part 20 may press and process not only the welded portion W but also a boundary between the welded portion W and the non-welding portion N so that a processing area increases.

Such a processing part 20 may have various structures. For example, the processing part 20 may include a pressing part 21, which is moved and presses the welded portion W while rotating, and a support 22 which supports the pressing part 21 so as to be rotatable.

Here, the pressing part 21 is a component, which is moved and presses the welded portion W while rotating, and may have various configurations.

For example, the pressing part 21 may include a roller or a ball so as to be moved and press the welded portion W while rotating. However, the structure of the pressing part 21 is not limited to the roller and the ball, and any structure may be available as long as the structure may be moved and press the welded portion W while rotating.

Such a pressing part 21 may have various materials. For example, the material of the pressing part 21 may include an iron or ceramic material in order to minimize abrasion caused by contact with the welded portion W. More specifically, the material of the pressing part 21 may be provided as hard metal tool steel and tool ceramic.

The support 22 is a component, which supports the pressing part 21 so as to be rotatable, and may have various configurations.

For example, the support 22 may have one end, which supports the pressing part 21 so as to be rotatable, and the other end which is connected to the main body 10 described above so as to enable the pressing part 21 to press and move along the welded portion W.

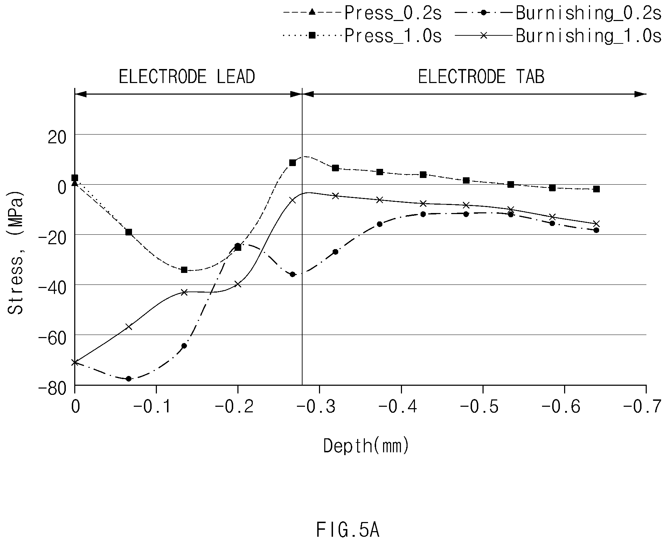

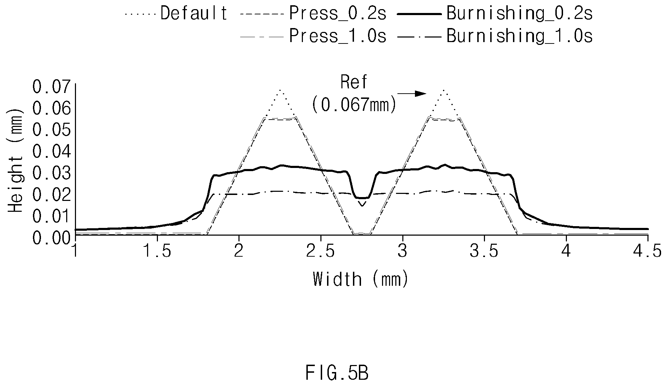

The quantitative effects of the present invention may be more specifically confirmed through FIGS. 5a and 5b. Here, FIG. 5a is a graph illustrating results obtained by comparing residual stress values of tab-lead stacks 100 after a method for manufacturing a secondary battery according to the related art and a method for manufacturing a secondary battery according to the present invention are performed, respectively. FIG. 5b is a graph illustrating results obtained by comparing degrees of surface roughness of the tab-lead stacks 100 after the method for manufacturing the secondary battery according to the related art and the method for manufacturing the secondary battery according to the present invention are performed, respectively.

Here, it may be understood that the method for manufacturing the secondary battery according to the related art performs press processing of instantaneously compressing the entire area of a welded portion W of a tab-lead stack 100 after welding of the tab-lead stack 100 is performed, and the method for manufacturing the secondary battery according to the present invention performs the roll-burnishing process described above on a welded portion W of a tab-lead stack 100 after welding of the tab-lead stack 100 is performed.

First, referring to FIG. 5a, changes in residual stress of the tab-lead stack 100 in the method for manufacturing the secondary battery according to the related art and changes in residual stress of the tab-lead stack 100 in the method for manufacturing the secondary battery according to the present invention may be compared to each other. It is noted that, on the graph, values of the tab-lead stack 100 in which the method for manufacturing the secondary battery according to the related art is performed are indicated by Press_0.2s or Press_1.0s, and values of the tab-lead stack 100 in which the method for manufacturing the secondary battery according to the present invention is performed are indicated by Burnishing_0.2s or Burnishing_1.0s. It is also noted that tensile residual stress is expressed as a positive value and compressive residual stress is expressed as a negative value.

Specifically, it is confirmed in the graph of FIG. 5a that a maximum of compressive residual stress absolute values of the tab-lead stack 100 after the method for manufacturing the secondary battery according to the related art (Press_0.2s or Press_1.0s) is performed is about 35 Mpa. In addition, it is confirmed that a maximum of compressive residual stress absolute values of the tab-lead stack 100 after the method for manufacturing the secondary battery according to the present invention (Burnishing_0.2s) is performed is about 80 Mpa. It is also confirmed that a maximum of compressive residual stress absolute values of the tab-lead stack 100 after the method for manufacturing the secondary battery according to the present invention (Burnishing_1.0s) is performed is about 70 Mpa.

That is, when the maximums of the compressive residual stress absolute values are compared between the method for manufacturing the secondary battery according to the related art and the method for manufacturing the secondary battery according to the present invention through the graph of FIG. 5a, it is confirmed that the method for manufacturing the secondary battery according to the present invention may impart, to the tab-lead stack 100, the compressive residual stress about two times or more than the method for manufacturing the secondary battery according to the related art. It is additionally confirmed that the method for manufacturing the secondary battery according to the present invention may impart the compressive residual stress not only to an electrode lead, but also to an electrode tab provided at a lower side of the electrode lead. It is thus confirmed that there is an advantage that the compressive residual stress may be more effectively imparted to the tab-lead stack 100.

Referring to FIG. 5b, changes in height of a shape-deformed portion a when the method for manufacturing the secondary battery according to the related art is performed, and changes in height of a shape-deformed portion a when the method for manufacturing the secondary battery according to the present invention is performed, may be compared to each other. Here, the height of the shape-deformed portion a may be understood as the height of the highest protrusion of the shape-deformed portion a before and after the method for manufacturing the secondary battery is performed. It is noted that, on the graph, values of the tab-lead stack 100 in which the method for manufacturing the secondary battery according to the related art is performed are indicated by Press_0.2s or Press_1.0s, and values of the tab-lead stack 100 in which the method for manufacturing the secondary battery according to the present invention is performed are indicated by Burnishing_0.2s or Burnishing_1.0s.

Specifically, referring to the graph in FIG. 5b, the height of the shape-deformed portion a is 0.054 mm and decreased by about 19.4% compared to the height (0.067 mm) of the typical shape-deformed portion a, after the method for manufacturing the secondary battery according to the related art (Press_0.2s or Press_1.0s) is performed. In contrast, the height of the shape-deformed portion a is 0.035 mm and decreased by about 52.2% compared to the height (0.067 mm) of the previous shape-deformed portion a, after the method for manufacturing the secondary battery according to the present invention (Burnishing_0.2s) is performed for 0.2 sec. It is also confirmed that the height of the shape-deformed portion a is 0.020 mm and decreased by about 70.1% compared to the height (0.067 mm) of the previous shape-deformed portion a, after the method for manufacturing the secondary battery according to the present invention (Burnishing_1.0s) is performed for 1 sec.

That is, as a result of comparing the changes in heigh of the shape-deformed portion a between the method for manufacturing the secondary battery according to the related art and the method for manufacturing the secondary battery according to the present invention through the graph in FIG. 5b, it is confirmed that the method for manufacturing the secondary battery according to the present invention may improve the surface roughness effectively at least 2.7 times or more than the method for manufacturing the secondary battery according to the related art.

It is additionally confirmed that a degree of the improvement in the surface roughness is regardless of the processing time in the method for manufacturing the secondary battery according to the related art, but the surface roughness is improved proportionally to the processing time (e.g., 0.2 sec or 1 sec) in the method for manufacturing the secondary battery according to the present invention. Thus, there is an advantage that the processing time may be adjusted to easily adjust the degree of improvement in the surface roughness.

Although the present invention has been described with reference to the limited embodiments and drawings, the present invention is not limited thereto and may be variously implemented by those of ordinary skill in the art to which the present invention pertains, within the technical idea of the present invention and an equivalent of the appended claims.

### [Description of the Symbols]

1: Device for manufacturing secondary battery
10: Main body
20: Processing part
21: Pressing part
22: Support
W: Welded portion
N: Non-welding portion
100: Tab-lead stack
a: Shape-deformed portion
S10: Electrode tab stack welding process
S20: Electrode tab stack processing process
S30: Tab-lead stack welding process
S40: Tab-lead stack processing process
S50: Tape attaching process

## Claims

1. A method for manufacturing a secondary battery, the method comprising:
a tab-lead stack forming process of stacking a plurality of electrode tabs and an electrode lead to form a tab-lead stack;
a tab-lead stack welding process of performing welding on the tab-lead stack to connect the electrode tabs to the electrode lead; and
a tab-lead stack processing process of sequentially pressing a welded portion of the tab-lead stack to process the welded portion.

2. The method of claim 1, wherein a plurality of shape-deformed portions at which shape deformation occurs by the welding are formed in the welded portion in at least one direction,
Wherein, in the tab-lead stack processing process, the plurality of shape-deformed portions are continuously pressed in a formation direction of the shape-deformed portions to process the welded portion.

3. The method of claim 1, wherein the tab-lead stack processing process is performed through a roll-burnishing or ball-burnishing process.

4. The method of claim 1, wherein, in the tab-lead stack processing process, the welded portion is pressed at a pressure of 100 kgf or higher.

5. The method of claim 1, wherein the tab-lead stack welding process is performed through ultrasonic welding or laser welding.

6. The method of claim 1, further comprising, before the tab-lead stack forming process,:
an electrode tab stack forming process of stacking the plurality of electrode tabs to form an electrode tab stack; and
an electrode tab stack welding process of performing welding on the electrode tab stack to connect the plurality of electrode tabs to each other.

7. The method of claim 6, further comprising an electrode tab stack processing process of sequentially pressing a welded portion of the electrode tab stack to process the welded portion between the electrode tab stack welding process and the tab-lead stack forming process.

8. The method of claim 1, further comprising, after the tab-lead stack processing process, a tape attaching process of attaching a tape made of an insulating material to the welded portion of the tab-lead stack.

9. An apparatus for manufacturing a secondary battery, which processes a welded portion of at least one of a tab-lead stack, in which a plurality of electrode tabs and an electrode lead are stacked, or an electrode tab stack, in which the plurality of electrode tabs are stacked, the apparatus comprising:
a main body; and
a processing part installed in the main body and configured to continuously press and process the welded portion.

10. The apparatus of claim 9, wherein the processing part comprises a roller or a ball, which is moved and presses the welded portion while rotating.

11. The apparatus of claim 9, wherein the processing part has an iron or ceramic material.
